# FASCICULE DE BREVET EUROPEEN

(11) **EP 3 314 830 B1**
(45) Date de publication et mention de la délivrance du brevet: **24.05.2023**
(21) Numéro de dépôt: 16741098.4
(22) Date de dépôt: 23.06.2016
(51) Int. Cl.: H04L 47/263

(54) **ADAPTATION D'UN PROFIL DE TRANSMISSION D'UNE COMMUNICATION WEB TEMPS REEL**
ANPASSUNG EINES WEBKOMMUNIKATIONSÜBERTRAGUNGSPROFILS IN ECHTZEIT
REAL-TIME WEB COMMUNICATION TRANSMISSION PROFILE ADAPTATION

(30) Priorité: 26.06.2015 FR 1555956
(43) Date de publication de la demande: 02.05.2018
(73) Titulaire: Orange, 92130 Issy-les-Moulineaux (FR)
(72) Inventeur: LACHARME, Sandrine, 22300 Lannion (FR); CARON, Romain, 22300 Lannion (FR)
(86) Numéro de dépôt international: PCT/FR2016/051550
(87) Numéro de publication internationale: WO 2016/207561

(56) Documents cités:
- US-A1- 2009 232 200
- US-A1- 2014 219 167
- Caner Kilinc: "ARAM WebRTC: A Rate Adaptation Model for WebRTC Real-Time Interactive Video Over 3GPP", INTERNET ARTICLE , 31 décembre 2013 (2013-12-31), pages FP-vi,1-61, XP002757662, Extrait de l'Internet: URL:http://pure.ltu.se/portal/files/919877 97/LTU-EX-2013-72229958.pdf [extrait le 2016-05-11]
- LUNDIN S HOLMER H ALVESTRAND H ET AL: "A Google Congestion Control Algorithm for Real-Time Communication on the World Wide Web; draft-alvestrand-rtcweb-congestion-03.txt" , A GOOGLE CONGESTION CONTROL ALGORITHM FOR REAL-TIME COMMUNICATION ON THE WORLD WIDE WEB; DRAFT-ALVESTRAND-RTCWEB-CONGESTION-03.TXT, INTERNET ENGINEERING TASK FORCE, IETF; STANDARDWORKINGDRAFT, INTERNET SOCIETY (ISOC), 22 octobre 2012 (2012-10-22), pages 1-18, XP015088196,
- CANER KILINC: "ARAM WebRTC: A Rate Adaptation Model for WebRTC Real-Time Interactive Video over 3GPP LTE", INTERNET CITATION, 31 December 2013 (2013-12-31), pages 1-60, XP002757662, Retrieved from the Internet: URL:http://pure.ltu.se/portal/files/919877 97/LTU-EX-2013-72229958.pdf [retrieved on 2016-05-11]

## Description

L'invention concerne l'adaptation d'un profil de transmission d'une communication Web temps réel d'une interface de communication Web temps réel d'un navigateur, en particulier l'adaptation d'un débit tel que le débit vidéo de la communication Web temps réel.

Les communications Web temps réel sont notamment définies aujourd'hui sous la forme d'une interface (aussi nommée APl pour application programming interface en anglais) WebRTC (Web Real Time communication en anglais) par le W3C (consortium du World Wide Web). Elles permettent de supporter des applications d'appel vidéo, de chat vidéo et de partage de fichiers entre navigateur Web sans nécessité des composants logiciels supplémentaires, tels qu'un plug-in.

Actuellement :
- Soit le débit vidéo est fixé par l'interface Web temps réel par défaut.
- Soit la résolution vidéo peut être modifiée par l'utilisateur.
- Soit la résolution vidéo est définie au niveau de l'applicatif utilisant l'interface de communication Web temps réel. Par exemple, si l'utilisateur d'un terminal disposant d'une interface Web temps réel souhaite mettre en place un appel vidéo. C'est le dispositif d'appel vidéo activé qui modifie la résolution de l'interface de communication Web temps réel avant d'établir l'appel.

Ainsi, la communication WebRTC est établie en appliquant des contraintes uniquement selon l'applicatif.

Par conséquent, suivant le canal de transmission au moment de la communication, le service rendu par l'applicatif pourra être bruité par des erreurs de transmission ou d'une qualité inférieure.

Un des buts de la présente invention est de remédier à des insuffisances de l'état de la technique.

Un objet de l'invention est un procédé d'adaptation d'un profil de transmission de communication Web temps réel d'une interface de communication Web temps réel d'un navigateur comportant une modification d'un paramètre navigateur de profil de transmission d'une interface de communication Web temps réel d'un navigateur en fonction de données relatives à la bande passante récupérées durant un laps de temps d'une communication Web temps réel.

Ainsi, le profil de transmission s'adapte à la bande passante de la communication Web temps réel en cours, permettant à l'utilisateur de bénéficier de la meilleure qualité lorsque la bande passante le permet, et inversement de limiter les erreurs de transmission lorsque la bande passante ne permet pas un débit important.

Avantageusement, le procédé d'adaptation comporte une récupération des données relatives à la bande passante durant un laps de temps d'une communication Web temps réel, les données récupérées étant utilisées par la modification du paramètre de profil de transmission.

Ainsi, l'adaptation n'a pas à requérir ces données auprès d'un récupérateur de données externe réduisant les interfaces d'échanges.

En outre, la limitation de la récupération des données à un laps de temps réduit les calculs de modification du profil de transmission en fonction de ces données récupérées car le nombre de données récupérées est moins important. Et, la récupération de plusieurs données servant à déterminer la modification du profil de transmission permet d'avoir une modification qui adapté pour un peu plus qu'un simple instant de transmission.

Avantageusement, la récupération des données est déclenchée par une demande d'établissement d'une communication Web temps réel.

Ainsi, la récupération des données est réalisée au début d'une communication limitant les interférences entre la récupération et la majeure partie de la communication. En outre, la récupération en début de communication permet une adaptation rapide du profil au début de la communication, offrant ainsi à l'utilisateur une communication Web temps réel de meilleure qualité le plus rapidement possible.

Avantageusement, le procédé d'adaptation déclenche une clôture de la communication Web temps réel en cours dès que la récupération des données est terminée, et un établissement d'une nouvelle communication Web temps réel déclenchée par la modification du paramètre de profil de transmission en fonction des données récupérées fournies par la récupération.

Ainsi, la récupération des données est réalisée au début d'une communication est dissocier de la communication. En outre, la récupération en début de communication permet à la communication Web temps réel demandée par l'utilisateur de démarrer avec un profil déjà adapté.

Avantageusement, le procédé d'adaptation comporte une détermination d'un profil de transmission en fonction d'une analyse statistique des données récupérées, le profil de transmission ainsi déterminé est utilisé par la modification du paramètre navigateur de profil de transmission de l'interface de communication Web temps réel du navigateur.

Avantageusement, le procédé d'adaptation comporte une détermination d'un profil de transmission en fonction d'une analyse statistique des données récupérées, le profil de transmission ainsi déterminé est utilisé par la modification du paramètre de profil de transmission du dispositif de communication.

Ainsi, la communication Web temps réel ne pâtira pas des légères fluctuations du canal de transmission. le profil puisqu'il en a été tenu compte dans l'élaboration de l'adaptation du profil de transmission au moyen de l'analyse statistique.

Avantageusement, la détermination du profil de transmission est effectuée en fonction de règles associant à un intervalle de valeurs de bande passante un profil de transmission prédéfini.

Ainsi, l'adaptation est réalisée de manière simplifiée.

Avantageusement, le profil de transmission comporte au moins un des paramètres de transmission de la liste suivante :
- Débit vidéo,
- Résolution vidéo,
- Débit audio,
- Résolution audio.

Ainsi, le débit vidéo et/ou la résolution vidéo et/ou le débit audio et/ou la résolution audio de la communication Web temps réel sont adaptés relativement à la bande passante.

Avantageusement, le procédé d'adaptation comporte une analyse statistique des données récupérées préalablement à la modification du profil de transmission.

Ainsi, l'adaptation réalise elle-même l'analyse statistique et n'a pas à requérir cette analyse auprès d'un analyseur externe réduisant les interfaces d'échanges.

Avantageusement, l'analyse statistique fournit en fonction des données récupérées une bande passante moyennée sur le laps de temps prédéterminé.

Ainsi, l'analyse statistique met en oeuvre des moyens de calculs légers.

Avantageusement, le procédé d'adaptation est un procédé d'adaptation de débit.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un adaptateur faisant partie d'un dispositif de communication Web temps réel et étant conçus pour commander l'exécution des différentes étapes de ce procédé.

L'invention vise donc aussi un programme comprenant des instructions de code de programme pour l'exécution des étapes du procédé d'adaptation du profil de transmission lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est également un dispositif d'adaptation d'un profil de transmission de communication Web temps réel d'une interface de communication Web temps réel d'un navigateur comportant un module de modification d'un paramètre navigateur de profil de transmission d'une interface de communication Web temps réel d'un navigateur en fonction de données relatives à la bande passante récupérées durant un laps de temps d'une communication Web temps réel.

Un autre objet de l'invention est un dispositif de communication Web temps réel d'un navigateur comportant un adaptateur de profil de transmission de communication Web temps réel d'une interface de communication Web temps réel d'un navigateur modifiant un paramètre navigateur de profil de transmission d'une interface de communication Web temps réel d'un navigateur en fonction de données relatives à la bande passante récupérées durant un laps de temps d'une communication Web temps réel.

Les caractéristiques et avantages de l'invention apparaîtront plus clairement à la lecture de la description, faite à titre d'exemple, et des figures s'y rapportant qui représentent :
- Figure 1, un schéma simplifié d'un procédé d'adaptation de débit selon l'invention ;
- Figure 2, un tableau simplifié de règles d'adaptation de profil selon l'invention ;
- Figure 3, un schéma simplifié d'un dispositif de communication Web temps réel selon l'invention.

Dans la suite de la description :
- le profil de transmission de communication Web temps réel d'une interface de communication Web temps réel d'un navigateur est aussi nommé de manière simplifiée profil de transmission de communication Web temps réel ; et
- le paramètre navigateur de profil de transmission d'une interface de communication Web temps réel d'un navigateur est aussi nommé paramètre navigateur de profil de transmission Web temps réel, voire paramètre de profil de transmission Web temps réel d'un navigateur.

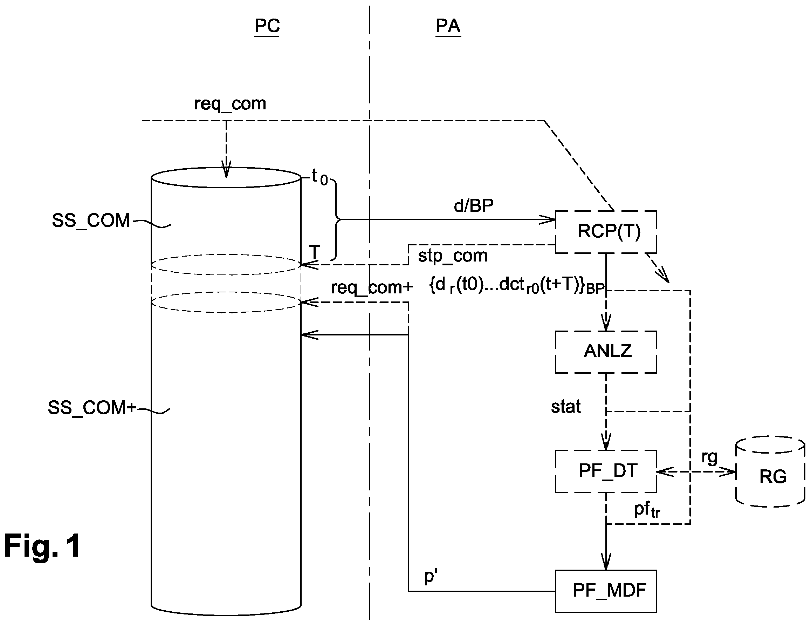

La figure 1 illustre un schéma simplifié d'un procédé d'adaptation de débit selon l'invention.

Le procédé d'adaptation PA d'un profil de transmission de communication Web temps réel comporte une modification PF_MDF d'un paramètre de profil de transmission d'un dispositif de communication Web temps réel en fonction de données *d*_{/*BP*} relatives à la bande passante récupérées durant un laps de temps T prédéterminé d'une communication Web temps réel SS_COM.

Le dispositif de communication mettant, notamment, en oeuvre un procédé de communication Web temps réel PC comportant au moins un établissement d'une session de communication Web temps réel SS_COM sur requête de communication *req_com* d'un utilisateur au moyen d'une interface du dispositif de communication.

Par exemple, le paramètre de profil du dispositif de communication Web temps réel passe d'une valeur *p* à, notamment, une valeur *p'* fournie par la modification PF_MDF ou à une valeur fonction de *p* et de la valeur *p*'fournie par la modification PF_MDF..

En particulier, le procédé d'adaptation PA comporte une récupération RCP(T) des données *d*_{/*BP*} relatives à la bande passante récupérées durant un laps de temps T prédéterminé d'une communication Web temps réel SS_COM, les données récupérées *{dᵣ(t₀)...dᵣ(t₀+T)}*_{/*BP*} étant utilisées par la modification PF_MDF du paramètre de profil de transmission.

Les données récupérées sont notamment des statistiques fournit par le navigateur mettant en oeuvre le procédé de communication PC Web temps réel. Par exemple, la récupération RCPT(T) déclenche l'envoi par le navigateur de BitsSent avec un Timestamp égal au laps de temps T prédéterminé. Les bitsSent permettent en retour de récupérées des données relatives à la bande passante.

En particulier, la récupération RCT(T) des données est déclenchée par une demande *req_com* d'établissement d'une communication Web temps réel.

En particulier, le procédé d'adaptation PA déclenche une clôture *stp_com* de la communication Web temps réel en cours dès que la récupération des données est terminée RCPT(T), et un établissement d'une nouvelle communication Web temps réel *req_com+* déclenchée par la modification PF_MDF du paramètre de profil de transmission en fonction des données récupérées fournies par la récupération.

En particulier, le procédé d'adaptation PA comporte une détermination d'un profil de transmission PF_DT en fonction d'une analyse statistique ANLZ des données récupérées, le profil de transmission *pfₜᵣ* ainsi déterminé est utilisé par la modification PF_MDF du paramètre de profil de transmission du dispositif de communication.

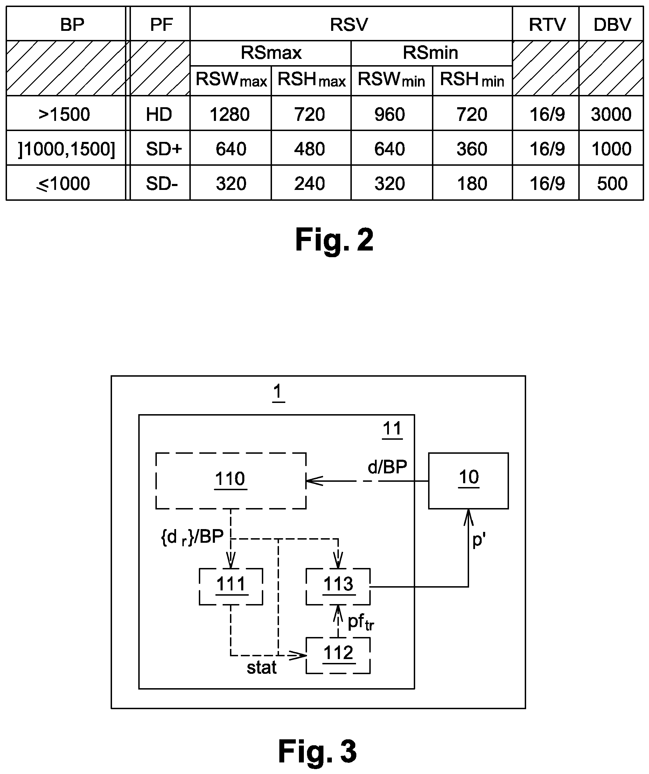

En particulier, la détermination du profil de transmission PF_DT est effectuée en fonction de règles rg associant à un intervalle de valeurs de bande passante BP un profil de transmission prédéfini PF, telles que les règles d'adaptation d'un profil associant un profil PF à une bande passante BP illustrées par la figure 2.

En particulier, le profil de transmission pfₜᵣ comporte au moins un des paramètres de transmission de la liste suivante :
- Débit vidéo DBV,
- Résolution vidéo RSV,
- Débit audio DBA,
- Résolution audio RSA.

En particulier, le procédé d'adaptation PA comporte une analyse statistique ANLZ des données récupérées *{dᵣ(t₀)...dᵣ(t₀+T)}*_{/*BP*} préalablement à la modification PF_MDF du profil de transmission .

En particulier, l'analyse statistique ANLZ fournit en fonction des données récupérées *{dᵣ(t₀)...dᵣ(t₀+T)}*_{/*BP*} une bande passante moyennée sur le laps de temps T.

En particulier, le procédé d'adaptation PA est un procédé d'adaptation de débit.

Ainsi, selon le débit vidéo moyen en cours d'utilisation et en fonction des données récupérées un profil est déterminé qui permet notamment de modifier la résolution vidéo. Le débit vidéo est adapté en modifiant, par exemple, le protocole de description de la session de communication (SDP, Session Protocol Description en anglais) soit une communication en cours soit préalablement à une nouvelle communication.

Un mode de réalisation particulier du procédé d'adaptation est un programme comprenant des instructions de code de programme pour l'exécution des étapes du procédé d'adaptation du profil de transmission lorsque ledit programme est exécuté par un processeur.

Notamment, un mode de réalisation particulier du procédé d'adaptation est un programme comprenant des instructions de code de programme pour l'exécution des étapes du procédé de communication Web temps réel et du procédé d'adaptation du profil de transmission lorsque ledit programme est exécuté par un processeur.

Ainsi, l'invention permet de modifier ou d'établir une communication Web temps réel en appliquant des contraintes relatives à la bande passante disponible.

La figure 2 illustre un tableau simplifié de règles d'adaptation de profil selon l'invention.

Pour une valeur déterminée d'une bande passante BP d'une communication en cours, les règles d'adaptation prévoient une adaptation du profil vidéo en profil vidéo PFV prédéfini comportant une résolution vidéo prédéfinie RSV, un ratio vidéo prédéfini RTV et un débit vidéo DBV prédéfini.

Dans notre exemple, lorsque les données récupérées permettent de déterminer que la bande passante est :
- supérieure à une valeur de 1500kb/sec, les règles d'adaptation permettent de déterminer un profil de transmission vidéo PFV de type HD (haute définition). Ce profil de transmission vidéo PFV prévoit :
   ∘ une résolution vidéo RSV définie par une largeur maximum RSVmax de 1280, une hauteur maximum RSHmax de 720, une largeur minmimum RSVmin de 960, une hauteur minimum RSHmin de 720 ;
   ∘ un ratio vidéo de 16/9eme;
   ∘ une modification du débit vidéo par ajout d'un débit vidéo supplémentaire maximum de 3000 (par exemple : 'a=mid:video\r\n b=AS:3000\r\n' en WebRTC) ;
- dans un intervalle de valeur entre 1000 kb/sec (exclue) et 1500kb/sec (incluse), les règles d'adaptation permettent de déterminer un profil de transmission vidéo PFV de type SD+ (définition standard supérieure). Ce profil de transmission vidéo PFV prévoit :
   ∘ une résolution vidéo RSV définie par une largeur maximum RSVmax de 640, une hauteur maximum RSHmax de 480, une largeur minmimum RSVmin de 640, une hauteur minimum RSHmin de 360;
   ∘ un ratio vidéo de 16/9eme;
   ∘ une modification du débit vidéo par ajout d'un débit vidéo supplémentaire maximum de 1000 (par exemple : 'a=mid:video\r\n b=AS:1000\r\n' en WebRTC) ; et
- inférieure ou égale à 1000 kb/sec, les règles d'adaptation permettent de déterminer un profil de transmission vidéo PFV de type SD- (définition standard inférieure). Ce profil de transmission vidéo PFV prévoit :
   ∘ une résolution vidéo RSV définie par une largeur maximum RSVmax de 320, une hauteur maximum RSHmax de 240, une largeur minmimum RSVmin de 320, une hauteur minimum RSHmin de 180;
   ∘ un ratio vidéo de 16/9eme;
   ∘ une modification du débit vidéo par ajout d'un débit vidéo supplémentaire maximum de 500(par exemple : 'a=mid:video\r\n b=AS:500\r\n' en WebRTC).

Ces profils ont été définis pour l'utilisation du WebRTC lors de la diffusion de télévision, notamment de télévision à la demande, ou de jeux disponibles dans le nuage (Cloud gaming en anglais). D'autres profils peuvent être ajoutés en fonction des services utilisant la communication Web temps réel.

La figure 3 illustre un schéma simplifié d'un dispositif de communication Web temps réel selon l'invention.

Le dispositif d'adaptation 11 d'un profil de transmission de communication Web temps réel, aussi nommé adaptateur d'un profil de transmission de communication Web temps réel, comporte un module de modification 113 d'un paramètre de profil de transmission d'un dispositif de communication Web temps réel 1 en fonction de données *d*_{/*BP*} relatives à la bande passante récupérées durant un laps de temps T d'une communication Web temps réel.

En particulier, le dispositif d'adaptation 11 comporte une récupérateur 110 des données *d*_{/*BP*} relatives à la bande passante récupérées durant un laps de temps T prédéterminé d'une communication Web temps réel SS_COM, les données récupérées *{dᵣ(t₀)...dᵣ(t₀+T)}*_{/*BP*} étant utilisées par le module de modification 113 du paramètre de profil de transmission.

En particulier, le déclenchement du récupérateur 110 des données est commandé par une demande *req_com* d'établissement d'une communication Web temps réel.

En particulier, le dispositif d'adaptation 11 déclenche une clôture *stp_com* de la communication Web temps réel en cours dès que la récupération des données est terminée RCPT(T), et un établissement d'une nouvelle communication Web temps réel *req_com+* déclenchée par le module de modification 113 du paramètre de profil de transmission en fonction des données récupérées fournies par la récupération.

En particulier, le dispositif d'adaptation 11 comporte un module de détermination 112 d'un profil de transmission en fonction d'une analyse statistique des données récupérées, le profil de transmission *pfₜᵣ* ainsi déterminé est utilisé par le module de modification 113 du paramètre de profil de transmission du dispositif de communication.

En particulier, le module de la détermination 112 du profil de transmission effectue la détermination en fonction de règles rg associant à un intervalle de valeurs de bande passante BP un profil de transmission prédéfini PF, telles que les règles d'adaptation d'un profil associant un profil PF à une bande passante BP illustrées par la figure 2.

En particulier, le profil de transmission pfₜᵣ comporte au moins un des paramètres de transmission de la liste suivante :
- Débit vidéo DBV,
- Résolution vidéo RSV,
- Débit audio DBA,
- Résolution audio RSA.

En particulier, le dispositif d'adaptation 11 comporte un analyseur statistique 111 des données récupérées *{dᵣ(t₀)...dᵣ(t₀+T)}*_{/*BP*} placé avant le module de modification 113 du profil de transmission .

En particulier, l'analyseur statistique 111 fournit en fonction des données récupérées *{dᵣ(t₀)...dᵣ(t₀+T)}*_{/*BP*} une bande passante moyennée sur le laps de temps T.

En particulier, le dispositif d'adaptation PA est un dispositif d'adaptation de débit.

En particulier, un dispositif de communication Web temps réel 1 comporte un adaptateur 11 de profil de transmission de communication Web temps réel modifiant un paramètre de profil de transmission du dispositif de communication Web temps réel 1 en fonction de données *d*_{/*BP*} relatives à la bande passante récupérées durant un laps de temps T d'une communication Web temps réel.

Par exemple, le paramètre de profil du dispositif de communication Web temps réel passe d'une valeur *p* à, notamment, une valeur *p'* fournie par la modification PF_MDF ou à une valeur fonction de *p* et de la valeur *p*' fournie par la modification PF_MDF..

Le dispositif de communication 1 met, notamment, en oeuvre un procédé de communication Web temps réel PC comportant au moins un établissement d'une session de communication Web temps réel SS_COM sur requête de communication *req_com* d'un utilisateur au moyen d'une interface du dispositif de communication. En particulier, le dispositif de communication 1 comporte en outre un transmetteur Web temps réel 10, tel qu'une interface WebRTC d'un navigateur mis en oeuvre par le dispositif de communication. Ainsi, le paramètre de profil de transmission modifié est celui du transmetteur Web temps réel 10.

Le dispositif de communication 1 est un terminal de communication tel qu'un Smartphone, une tablette, une phablette, un ordinateur...

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessous. Un composant matériel correspond à tout élément d'un ensemble matériel (ou hardware) apte à mettre en oeuvre une fonction ou un ensemble de fonctions.

## Revendications

1. Procédé d'adaptation d'un profil de transmission de communication Web temps réel d'une interface de communication Web temps réel d'un navigateur comportant une modification d'un paramètre navigateur de profil de transmission d'une interface de communication Web temps réel d'un navigateur en fonction de données relatives à la bande passante récupérées durant un laps de temps d'une communication Web temps réel.

2. Procédé d'adaptation du profil de transmission selon la revendication précédente, **caractérisé en ce que** le procédé d'adaptation comporte une récupération des données relatives à la bande passante durant un laps de temps d'une communication Web temps réel, les données récupérées étant utilisées par la modification du paramètre de profil de transmission.

3. Procédé d'adaptation du profil de transmission selon la revendication précédente, **caractérisé en ce que** la récupération des données est déclenchée par une demande d'établissement d'une communication Web temps réel.

4. Procédé d'adaptation du profil de transmission selon l'une quelconque des revendications 2 ou 3, **caractérisé en ce que**, le procédé d'adaptation déclenche une clôture de la communication Web temps réel en cours dès que la récupération des données est terminée, et un établissement d'une nouvelle communication Web temps réel déclenchée par la modification du paramètre de profil de transmission en fonction des données récupérées fournies par la récupération.

5. Procédé d'adaptation du profil de transmission selon l'une quelconque des revendications précédentes, **caractérisé en ce que** le procédé d'adaptation comporte une détermination d'un profil de transmission en fonction d'une analyse statistique des données récupérées, le profil de transmission ainsi déterminé est utilisé par la modification du paramètre de profil de transmission de l'interface de communication Web temps réel du navigateur.

6. Procédé d'adaptation du profil de transmission selon la revendication précédente, **caractérisé en ce que** la détermination du profil de transmission est effectuée en fonction de règles associant à un intervalle de valeurs de bande passante un profil de transmission prédéfini.

7. Procédé d'adaptation du profil de transmission selon l'une quelconque des revendications précédentes **caractérisé en ce que** le profil de transmission comporte au moins un des paramètres de transmission de la liste suivante :
• Débit vidéo,
• Résolution vidéo,
• Débit audio,
• Résolution audio.

8. Procédé d'adaptation du profil de transmission selon l'une quelconque des revendications précédentes, **caractérisé en ce que** le procédé d'adaptation comporte une analyse statistique des données récupérées préalablement à la modification du profil de transmission.

9. Procédé d'adaptation du profil de transmission selon l'une quelconque des revendications précédentes, **caractérisé en ce que** l'analyse statistique fournit en fonction des données récupérées une bande passante moyennée sur le laps de temps prédéterminé.

10. Procédé d'adaptation du profil de transmission selon l'une quelconque des revendications précédentes **caractérisé en ce que** le procédé d'adaptation est un procédé d'adaptation de débit.

11. Programme comprenant des instructions de code de programme pour l'exécution des étapes du procédé d'adaptation du profil de transmission selon l'une quelconque des revendications précédentes lorsque ledit programme est exécuté par un processeur.

12. Dispositif d'adaptation d'un profil de transmission de communication Web temps réel d'une interface de communication Web temps réel d'un navigateur comportant un module de modification d'un paramètre navigateur de profil de transmission d'une interface de communication Web temps réel d'un navigateur en fonction de données relatives à la bande passante récupérées durant un laps de temps d'une communication Web temps réel.

13. Dispositif de communication Web temps réel d'un navigateur comportant un adaptateur de profil de transmission de communication Web temps réel d'une interface de communication Web temps réel d'un navigateur modifiant un paramètre navigateur de profil de transmission d'une interface de communication Web temps réel d'un navigateur en fonction de données relatives à la bande passante récupérées durant un laps de temps d'une communication Web temps réel.

## Patentansprüche

1. Verfahren zur Anpassung eines Übertragungsprofils einer Echtzeit-Webkommunikation, das eine Änderung eines Übertragungsprofilparameters einer Echtzeit-Webkommunikation-Vorrichtung abhängig von Daten betreffend die Bandbreite aufweist, die während einer Zeitspanne einer Echtzeit-Webkommunikation wiedergewonnen werden.

2. Verfahren zur Anpassung des Übertragungsprofils nach dem vorhergehenden Anspruch, **dadurch gekennzeichnet, dass** das Anpassungsverfahren eine Wiedergewinnung der Daten betreffend die Bandbreite aufweist, die während einer Zeitspanne einer Echtzeit-Webkommunikation wiedergewonnen werden, wobei die wiedergewonnenen Daten von der Änderung des Übertragungsprofilparameters verwendet werden.

3. Verfahren zur Anpassung des Übertragungsprofils nach dem vorhergehenden Anspruch, **dadurch gekennzeichnet, dass** die Wiedergewinnung der Daten von einer Aufbauanforderung einer Echtzeit-Webkommunikation ausgelöst wird.

4. Verfahren zur Anpassung des Übertragungsprofils nach einem der Ansprüche 2 oder 3, **dadurch gekennzeichnet, dass** das Anpassungsverfahren einen Abschluss der laufenden Echtzeit-Webkommunikation, sobald die Wiedergewinnung der Daten beendet ist, und einen Aufbau einer neuen Echtzeit-Webkommunikation auslöst, die von der Änderung des Übertragungsprofilparameters abhängig von den durch die Wiedergewinnung gelieferten wiedergewonnenen Daten ausgelöst wird.

5. Verfahren zur Anpassung des Übertragungsprofils nach einem der vorhergehenden Ansprüche, **dadurch gekennzeichnet, dass** das Anpassungsverfahren eine Bestimmung eines Übertragungsprofils abhängig von einer statistischen Analyse der wiedergewonnenen Daten aufweist, wobei das so bestimmte Übertragungsprofil von der Änderung des Übertragungsprofilparameters der Kommunikationsvorrichtung verwendet wird.

6. Verfahren zur Anpassung des Übertragungsprofils nach dem vorhergehenden Anspruch, **dadurch gekennzeichnet, dass** die Bestimmung des Übertragungsprofils abhängig von Regeln ausgeführt wird, die einem Bandbreite-Werteintervall ein vordefiniertes Übertragungsprofil zuordnen.

7. Verfahren zur Anpassung des Übertragungsprofils nach einem der vorhergehenden Ansprüche, **dadurch gekennzeichnet, dass** das Übertragungsprofil mindestens einen der Übertragungsparameter der folgenden Liste aufweist:
• Video-Bitrate,
• Video-Auflösung,
• Audio-Bitrate,
• Audio-Auflösung.

8. Verfahren zur Anpassung des Übertragungsprofils nach einem der vorhergehenden Ansprüche, **dadurch gekennzeichnet, dass** das Anpassungsverfahren eine statistische Analyse der wiedergewonnenen Daten vor der Änderung des Übertragungsprofils aufweist.

9. Verfahren zur Anpassung des Übertragungsprofils nach einem der vorhergehenden Ansprüche, **dadurch gekennzeichnet, dass** die statistische Analyse abhängig von den wiedergewonnenen Daten eine mittlere Bandbreite in der vorbestimmten Zeitspanne liefert.

10. Verfahren zur Anpassung des Übertragungsprofils nach einem der vorhergehenden Ansprüche, **dadurch gekennzeichnet, dass** das Anpassungsverfahren ein Bitrate-Anpassungsverfahren ist.

11. Programm, das Programmcodeanweisungen für die Ausführung der Schritte des Verfahrens zur Anpassung des Übertragungsprofils nach einem der vorhergehenden Ansprüche enthält, wenn das Programm von einem Prozessor ausgeführt wird.

12. Anpassungsvorrichtung eines Übertragungsprofils einer Echtzeit-Webkommunikation, die ein Änderungsmodul eines Übertragungsprofilparameters einer Echtzeit-Webkommunikation-Vorrichtung abhängig von Daten betreffend die Bandbreite aufweist, die während eines Zeitspanne einer Echtzeit-Webkommunikation wiedergewonnen werden.

13. Echtzeit-Webkommunikation-Vorrichtung, die einen Adapter eines Übertragungsprofils einer Echtzeit-Webkommunikation aufweist, der einen Übertragungsprofilsparameter einer Echtzeit-Webkommunikation-Vorrichtung abhängig von Daten betreffend die Bandbreite ändert, die während einer Zeitspanne einer Echtzeit-Webkommunikation wiedergewonnen werden.

## Claims

1. Method for adapting a real-time Web communication transmission profile comprising a modification of a transmission profile parameter of a real-time Web communication device as a function of bandwidth-related data recovered during a time span of a real-time Web communication.

2. Method for adapting the transmission profile according to the preceding claim, **characterized in that** the adaptation method comprises a recovery of the bandwidth-related data recovered during a time span of a real-time Web communication, the data recovered being used by the modification of the transmission profile parameter.

3. Method for adapting the transmission profile according to the preceding claim, **characterized in that** the data recovery is triggered by a real-time Web communication setup request.

4. Method for adapting the transmission profile according to either one of Claims 2 or 3, **characterized in that** the adaptation method triggers a closure of the real-time Web communication in progress as soon as the data recovery has terminated, and a setup of a new real-time Web communication triggered by the modification of the transmission profile parameter as a function of the data recovered provided by the recovery.

5. Method for adapting the transmission profile according to any one of the preceding claims, **characterized in that** the adaptation method comprises a determination of a transmission profile as a function of a statistical analysis of the data recovered, the transmission profile thus determined is used by the modification of the transmission profile parameter of the communication device.

6. Method for adapting the transmission profile according to the preceding claim, **characterized in that** the determination of the transmission profile is performed as a function of rules associating a predefined transmission profile with an interval of bandwidth values.

7. Method for adapting the transmission profile according to any one of the preceding claims, **characterized in that** the transmission profile comprises at least one of the transmission parameters of the following list:
• Video throughput,
• Video resolution,
• Audio throughput,
• Audio resolution.

8. Method for adapting the transmission profile according to any one of the preceding claims, **characterized in that** the adaptation method comprises a statistical analysis of the data recovered prior to the modification of the transmission profile.

9. Method for adapting the transmission profile according to any one of the preceding claims, **characterized in that** the statistical analysis provides as a function of the data recovered a bandwidth averaged over the predetermined time span.

10. Method for adapting the transmission profile according to any one of the preceding claims, **characterized in that** the adaptation method is a throughput adaptation method.

11. Program comprising program code instructions for the execution of the steps of the method for adapting the transmission profile according to any one of the preceding claims when said program is executed by a processor.

12. Device for adapting a real-time Web communication transmission profile comprising a module for modifying a transmission profile parameter of a real-time Web communication device as a function of bandwidth-related data recovered during a time span of a real-time Web communication.

13. Real-time Web communication device comprising a real-time Web communication transmission profile adaptor modifying a transmission profile parameter of a real-time Web communication device as a function of bandwidth-related data recovered during a time span of a real-time Web communication.
